# NEW EUROPEAN PATENT SPECIFICATION

(11) **EP 2 588 311 B2**
(45) Date of publication and mention of the opposition decision: **25.03.2020**
(45) Mention of the grant of the patent: 03.05.2017
(21) Application number: 11728282.2
(22) Date of filing: 30.06.2011
(51) Int. Cl.: B32B 21/10, E04C 2/18, E04C 2/22, E04F 13/16, E04F 15/02, E04F 15/10

(54) **A panel comprising a polymeric composite layer and a reinforcement layer**
Paneel mit einer Polymerverbundstoffschicht und einer Verstärkungsschicht
Panneau comprenant une couche composée polymère et une couche de renfort

(30) Priority: 30.06.2010 EP 10167985
(43) Date of publication of application: 08.05.2013
(60) Divisional application: 17168881.5
(73) Proprietor: Unilin, BVBA, 8710 Wielsbeke (BE)
(72) Inventor: VERMEULEN, Bruno Paul Louis, B-3680 Aldeneik-Maaseik (BE)
(74) Representative: Valea AB
(86) International application number: PCT/EP2011/060991
(87) International publication number: WO 2012/001091

(56) References cited:
- EP-A1- 1 847 385
- EP-A1- 1 938 963
- EP-A1- 2 269 814
- EP-A1- 2 339 092
- EP-A2- 1 792 698
- WO-A1-01/00406
- WO-A1-01/81056
- WO-A1-99/26773
- WO-A1-99/32285
- WO-A1-2005/072957
- WO-A1-2005/123380
- WO-A1-2007/052885
- WO-A1-2007/086632
- WO-A1-2008/122668
- WO-A1-2010/023042
- WO-A2-2011/141849
- DE-A1- 1 653 161
- DE-A1-102004 035 011
- DE-A1-102004 039 505
- DE-A1-102006 048 471
- JP-A- 2010 059 611
- US-A- 4 514 258
- US-A1- 2004 242 095
- US-A1- 2009 029 097
- TEISCHINGER, ALFRED: "Holz-Kunststoff-Verbundwerkstoffe (WPC) - Möglichkeiten und Grenzen einer neuen Werkstoffgeneration", SCHWEIZ. Z. FORSTWES., vol. 156, no. 11, 2005, pages 416-419, XP002606106,
- Klysov, A.A.: "Wood-Plastic composites", 2007, Wiley-Interscience, New York (US), XP002606107, ISBN: 978-0-470-14891-4 pages 26-28, the whole document
- International Standard ISO 4918
- Eidesstattliche Versicherung Ulrich Windmöller mit Anlagen
- Eidesstattliche Versicherung Bernhard Voith mit Anlagen

## Description

The present invention relates to a floor panel which comprises a polymeric composite layer.

A panel having a layer of a polymeric composite is known from WO 2008/122668. In this case the polymeric composite is WPC, which is a composite of polymeric material and a natural fibre for example from any wood source. Due to the presence of polymers the dimensions of the known panels depend on temperature more strongly than for example wooden floor boards or panels mainly made of wood-based material, which limits the applicability of panels including a WPC layer.

An object of the present invention is to provide a panel including a polymeric composite layer which is applicable in changing ambient conditions.

For this purpose one floor panel according to the invention comprises the features of claim 1 whilst another floor panel according to the invention comprises the features of claim 2. The reinforcement layer may also reinforce the polymeric composite layer in a direction extending transversely to the plane of the panel.

An advantage of the panels according to the invention is that deformation of the polymeric composite layer in the plane of the panels is minimized. In other words, the sensitivity of the dimensions of the panels to ambient conditions is minimized. This means that the panels can be applied at locations where ambient conditions change, for example in case of floor panels that are connected to each other to form a flooring on a floor having a floor heating system. Furthermore, in case of floor panels that are mutually connected to form a flooring the expansion clearance between the wall and an adjacent floor panel can be minimized. The reinforcement layer is thinner than the polymeric composite layer, for example less than 0.4 mm but a greater thickness is possible. It is noted that the reinforcement layer may be a sheet or plate; the layer may be self-supporting and/or made of one piece.

The polymeric composite of the floor panel of claim 1 is a mixture of one or more polymers and non-polymeric material. Examples of non-polymeric material are chalk and carpet waste, jute, styrene butadiene (latex), but a lot of alternative materials are conceivable. The polymeric composite may further contain a coupling agent to improve the material cohesion. Alternative additives are elastomers or materials having a high absorption capacity of fillers. This may also improve characteristics like UV resistance, humidity resistance and bending strength. The fillers may be fibres, powders or the like. In general, the polymeric composite layer may be a composite of a polymer and a non-polymer composite substance. The composite substance may be natural or non-natural fibres, particles or the like. In the floor panel of claim 2 the polymeric composite layer is a WPC layer made of wood plastic composite (WPC) and the reinforcement layer is a non-WPC reinforcement layer.

The reinforcement layer is incorporated within the polymeric composite layer since this creates an efficient reinforcement of the polymeric composite layer. In terms of manufacturing such an embodiment the reinforcement layer can easily be integrated in a known pressing process for manufacturing a polymeric composite panel such that the reinforcement layer is embedded within the polymeric composite layer. Such a process is described in WO 2008/122668.

The reinforcement layer has an open structure. The advantage is that upon pressing melted granulate layers together whereas the reinforcement layer is sandwiched between the layers a strong bond between the melted granulate layers at open areas of the open structure can be achieved. As a result the reinforcement layer is fully integrated in the polymeric composite layer without significantly weakening the panel at the reinforcement layer in a direction perpendicular to the plane of the panel. Thus, the resulting polymeric composite layer is continuous through open areas of the open structure, i.e. in a direction perpendicular to the plane of the panel.

The reinforcement layer may comprise longitudinal filaments and transversal filaments extending in transverse direction with respect to the longitudinal filaments. The filaments may be oriented perpendicularly with respect to each other but this is not necessary. The mutual distance of at least one of the longitudinal filaments and transversal filaments may vary within the reinforcement layer, which provides the opportunity to create a stronger reinforcement at predefined areas of the panel. For example, the mutual distance may vary between 1-5 filaments per cm. It is advantageous when the mutual distance is adapted to the size of the granulate of which the polymeric composite layer is made; in particular if the granulate is not entirely melted it can still pass through the reinforcement layer upon pressing. The filaments may be made off glass fibre, or fibres of polyester high tenacity, polyester textile, cellulose, aramid, PEN, Nomex or other materials that are dimensionally insensitive to changing ambient conditions such as temperature changes.

It is noted that the filaments may be fixed to each other by fixing means, for example glue. Both the filaments and the fixing means will be selected such that they are compatible with polymeric composite and preferably form a strong bond therewith. Additionally, binders may be added to the polymeric composite and/or to the reinforcement layers, such as acrylate, ethylenvinyl acetate, polyurethane, polyvinyl alcohol, polyvinyl acetate, polyvinylchloride, styrene butadiene or the like.

The panel may comprise at least another reinforcement layer, which is preferably located at a distance from the reinforcement layer. A plurality of reinforcement layers is possible, as well. The reinforcement layers may be located within the polymeric composite layer.

The invention will hereafter be elucidated with reference to very schematic drawings showing an embodiment of the invention by way of example.
Fig. 1 is an enlarged sectional view of an embodiment of a panel according to the invention.
Fig. 2 is a series of very schematic top views of different types of reinforcement layers, being applicable in the panel according to Fig. 1.
Fig. 3 is a series of perspective views of different types of reinforcement layers, being applicable in the panel according to Fig. 1.
Fig. 4 is a very schematic view of an apparatus for manufacturing a panel of Fig. 1.

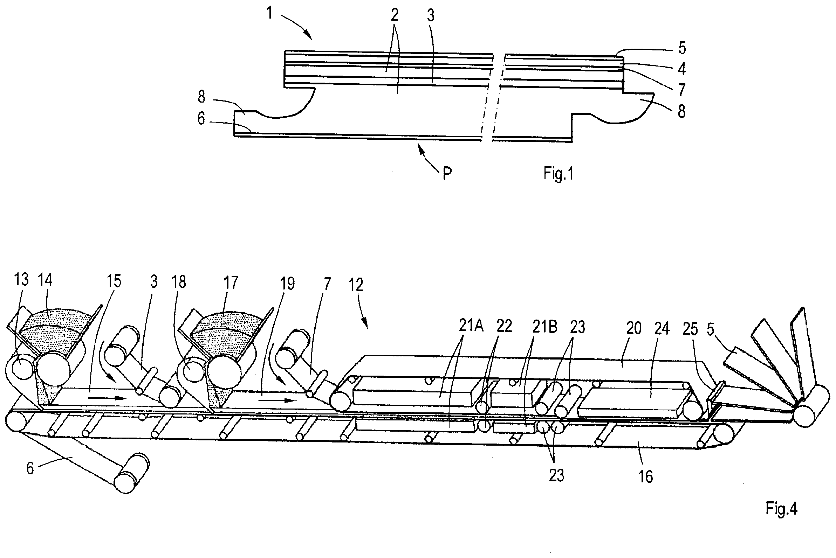

Fig. 1 shows a cross-sectional view of an embodiment of a floor panel 1 according to the invention. The floor panel 1 includes a WPC layer 2 made of wood plastic composite (WPC) granulate and a reinforcement layer 3. The reinforcement layer 3 is thinner than the WPC layer 2 and is intended to minimize dimensional changes of the WPC layer 2 in the plane of the panel 1. In this embodiment the reinforcement layer 3 is incorporated within the WPC layer 2 such that portions of the WPC layer 2 extend at both sides of the reinforcement layer 3. For stability reasons it is preferred that the thicknesses of these portions of the WPC layer 2 are substantially equal. It is noted that instead of WPC an alternative polymeric composite may be applied.

Furthermore, the floor panel 1 according to Fig. 1 includes a top laminate on the WPC layer 2. In this example, the top laminate is a high pressure laminate construction comprising at least a printed decorative layer 4 and an impregnated protective overlay 5 pressed together with heat and pressure to become one single layer due to the impregnation material which is preferably a resin such as melamine resin. Preferably the melamine resin is mixed with urea formaldehyde to obtain advantageous properties such as minimized shrinkage and reduced cloudiness. The overlay paper 5 is preferably a high abrasive overlay which preferably has aluminum oxide or other abrasive resistant hard particles embedded in the surface of the paper. It is noted that a different layer type can be provided on the WPC layer, for example a polymeric film having a decoration pattern, which is printed on the film. The polymeric film may be melted to the WPC layer.

The top laminate or top layer as described above consists of one or more paper layers, but also one or more wood veneer layers, vulcanized cellulose layers or other layers suitable as top layer are conceivable.

The design and overall upper layers can be textured such as embossed in register with the design of the printed decorative layer in order to even better imitate natural material, such as stone, brick, ceramic, wood, marble or the like.

Preferably but not necessarily a backing layer 6 is provided below the WPC layer 2 and is fixed to the underside of the WPC layer 2. The backing layer 6 can be used as a balancing layer and it may also have moisture resisting properties. Furthermore, a paper layer 7 may be provided between the MPC layer and the top laminate.

At least on two opposite sides of the floor panel 1 and preferably on all sides are formed coupling means 8 to couple adjacent panels 1 together. Preferably, the coupling means 8 also include a mechanical locking system to lock the adjacent floor panels 1 not only in a direction perpendicular to the surface of the panels, but also in a direction parallel to the surface and perpendicular to the respective side of the floor panel 1. However the invention is not limited thereto at all. Although Fig. 1 shows a tongue and a groove as coupling means 8, all coupling systems, including the use of adhesives is encompassed by the invention.

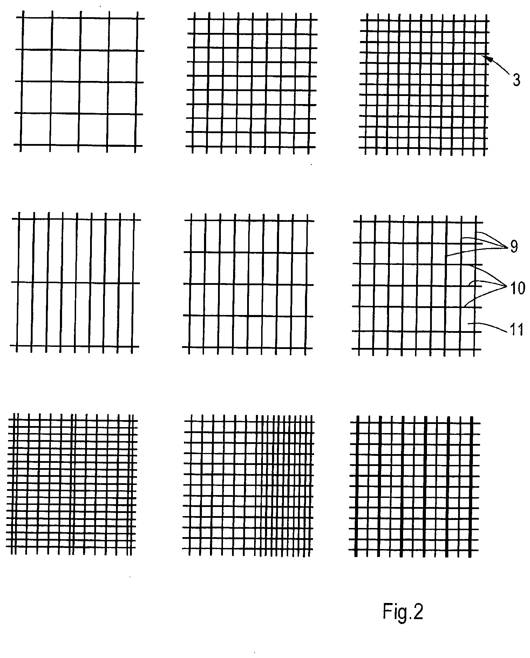

The reinforcement layer 3 has an open structure, since this allows the portions of the WPC layer 2 at both sides of the reinforcement layer 3 to contact each other during manufacturing, hence creating an integral structure of the WPC layer 2 and the reinforcement layer 3. Fig. 2 shows several examples of reinforcement layers 3 including an open structure. The reinforcement layers 3 as shown comprise parallel longitudinal filaments 9 and parallel transversal filaments 10 which extend in transverse direction with respect to the longitudinal filaments 9. The filaments 9, 10 are oriented such that they envelope open areas 11. Although the longitudinal filaments 9 and transversal filaments 10 in the embodiments are perpendicularly orientated with respect to each other this is not necessary. Fig. 2 also shows that the reinforcement layers 3 may vary in respect of mutual distance of the filaments 9, 10 in different directions, even within specific portions of the reinforcement layer 3, and in filament dimensions.

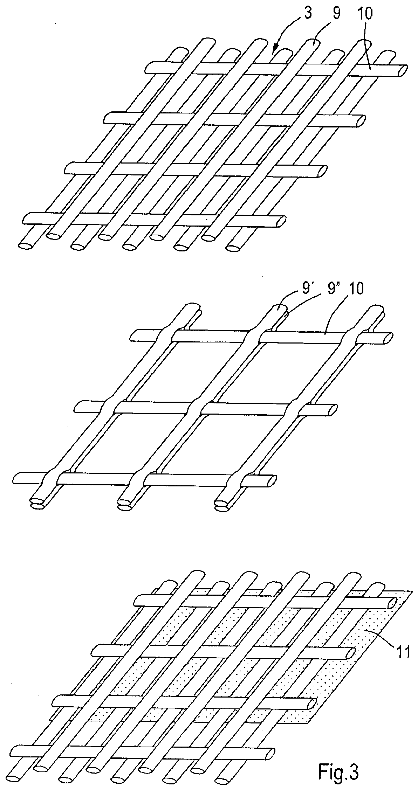

Fig. 3 shows examples of different reinforcement layers 3 in perspective view. The longitudinal filaments 9 and transversal filaments 10 may lay on each other and may be mutually attached at intersections of the filaments 9, 10. Alternatively, the longitudinal filaments each comprise parallel filaments 9', 9" which are attached to each other along the filaments 9' , 9" and interrupted by the transversal filament 10 which are sandwiched between the parallel filaments 9', 9" at intersection of the filaments 9' , 9" and the transversal filaments 10. Furthermore, the filaments 9, 10 may be laminated to a fabric 11, for example a non woven, as illustrated in the lower drawing of Fig. 3.

Fig. 4 shows an apparatus 12 for manufacturing laminate sheets S which may include a plurality of panels 1 (see Fig. 1) which are cut from the sheets S and are finished in a manner well known in the prior art.

The apparatus 12 includes a first granulate supply 13 including a mechanism 14 which is adapted to supply a first layer of granulate 15 on a supporting conveyor belt 16. The apparatus 12 further includes a second granulate supply 17 including a mechanism 18 which is adapted to supply a second layer of granulate 19.

Between the first granulate supply 13 and the second granulate supply 17 the reinforcement layer 3 is supplied by unwinding it from a supply roller. The second layer of granulate 19 is supplied on top of the reinforcement layer 3.

The granulate is made from wood/plastic composite which is a material known in the prior art. It may include from about 30 wt% to about 95 wt% of at least one polymeric material and from about 5 wt% to about 80 wt% of at least one natural fibre or flour by weight of the WPC layer. Alternatively, the polymeric composite includes fibres, particles, flour or the like, that comprises one or more polymers itself, to which possibly one or more polymeric materials are added. The polymeric material can be one or more polymers having a polyolefin group, such as polyethylene. Other exemplary polymers include polypropylene, polyvinyl chloride, copolymer of PVC, and also other suitable thermoplastic. The polymer material to be processed can be in powder, liquid, cubed, pelletized form and/or any other form. The polymeric material can be virgin, recycled or a mixture of both. Additionally, the polymeric material may be provided with natural or non-natural additives, and/or a coupling agent to improve the material cohesion. The polymeric material can be incorporated with a blowing agent to make a cellular foam structure core.

The natural fibres or flour have a specific moisture content, depending on the WPC-board specifications and requirements. The natural fibres can be from any wood source, cellulose source, other natural sources, or any combination thereof. Generally, any natural fibre can be used, which is from trees, planets, parts thereof and the like. The specific selection of a particular type of wood and/or wood fibres can have an influence on the properties of the final panel. The fibres of an exotic hard wood type could for example be substantially thicker and/or longer than normal fir wood. The bending stiffness will be higher if the WPC layer is made with longer fibres. Synthetic fibres may also be used to enhance mechanical properties such as flexural and tensile modules of the product. The natural fibre or flour can be virgin, recycled or a mixture of both. Furthermore the natural fibres or flour can be incorporated with a foaming agent to make a cellular foam structure core.

The mechanisms 14, 18 may include a system provided by Schilling-Knobel GmbH, as is described in WO 99/26773, which is incorporated herein by reference thereto, including a hopper which is resting on a metering roller which picks top the material to be scattered on the conveyor belt 16. Other means are of course conceivable.

The lower conveyor belt 16 has a greater length than a second, upper conveyor belt 20 which is positioned at a distance from the first and second granulate supply 13, 17.

The upper and lower conveyor belt 16, 20 run over a curtain length parallel to each other and include various zones. The first zone in the direction of conveyance of the conveyor bells 16, 20 is a heating zone 21. In this zone, the WPC granulate is heated to such temperature that the granulate melts to a sufficient extent in order to weaken to a mass which can be shaped into a solid continuous sheet. The heating temperature depends on the polymer used in the WPC granulate and can for example be between 180 °C and 250 °C. In this exemplary embodiment, the heating zone 21 is divided in a first heating zone 21A and a second heating zone 21B with nip rollers 22 in between. These nip rollers 22 are positioned below the transport part of the lower conveyer belt 16 and above the transport part of the upper conveyor 20 to effect a first pressing action on the layers 15, 19 of melted granulate. A second set of nip rollers 23 consisting of two pairs of upper and lower nip rollers effects a final pressing action on the layers 15, 19 of melted granulate and determines the final thickness of the sheet to be formed.

As described hereinbefore the reinforcement layer 3 has an open structure such that the first and second layers of the melted granulate 15, 19 are pressed to each other through the open areas 11 of the reinforcement layer 3. This avoids any weak bond between the layers 15, 19 due to the addition of the reinforcement layer 3.

The last zone within the conveyor belts 16, 20 is an annealing zone 24 by which the sheet layers 15, 19 are cooled and brought in the final form. The conveyor belts 16, 20 are formed by two reinforced, thermally stable coated belts, for example from glass plus Teflon®. The back sides of the belts are in contact with heating platens in the heating zones 21A, 21B and with cooling platens in the annealing zone 24. The platens in the upper conveyor belt 20 are movable in vertical direction, while the platens in the lower conveyor belt 16 are rigidly mounted. The movability of the platens with the upper conveyor 20 is to create a gap according to the required thickness of the sheet to be formed. In principle, the heating and cooling platens do no exert pressure on the granulate layers 15, 19 and only the calibrating nip rollers 22, 23 are adapted to exert a pressure on the melted granulate layers 15, 19 to determine the thickness thereof.

As illustrated in Fig. 4 there is supplied a layer of paper or other absorbing material 6, 7 to the lower side of the first layer 15 and upper side of the second layer 19 of granulate 3 in order to be melted thereto, i.e. to be attached thereto through the melted plastic from the granulate. The paper layers 6, 7 are supplied by unwinding them from supply rollers. The paper layers 6, 7 are interposed between the first granulate layer 15 and the lower conveyor belt 16 and between the second granulate layer 19 and the upper conveyor belt 20, respectively, so that they also assist in preventing the granulate layers 15, 19 from sticking to the conveyor belts 16, 20. The conveying speed of the paper layers 6, 7 and the reinforcement layer 3 will be adapted to that of the conveyor belts 16, 20 so that they are matching, but it is also possible that they are not positively supplied, but are pulled away by the friction between the paper and reinforcement layers and the granulate layers 15, 19 and the conveyor belts 16, 20.

Instead of paper layer 7 it is possible to supply a polymeric sheet, for example polypropylene, PVC, polyester or the like, to the melted layer of granulate of the WPC layer. The polymeric film melts and as a result after pressing, the resulting panel obtains a smooth surface at the side where the polymeric sheet is provided and melted. This is advantageous if the WPC layer has a coarse surface due to inhomogeneous mixing of the polymer and a composite substance. Additionally, the melted polymeric layer on the WPC layer may also improve the stability and stiffness of the resulting panel and further improve the adherence of still another polymeric film thereon which is provided at a later stage such that it does not fully melt. This further polymeric film may be provided with a decoration pattern. It is also possible to provide a melted polymeric layer or film at the back side of the WPC layer, which may function as a balancing layer.

At a position downstream of the upper conveyor belt 20 there is arranged a cutting mechanism 25 to cut the continuous sheet web into separate sheets S which are then collected for further processing so as to form the flour panel 1 as shown in Fig. 1.

An alternative method of manufacturing the panels according to the invention is one in which a top laminate and optionally also a backing layer is fixed directly to the WPC layer simultaneously with the formation of the WPC layer including the reinforcement layer 3. This means that the (paper) layers 6 and 7 are then formed by the materials for forming the top laminate and the backing layer which are directly fixed to the WPC layers by adherence thereto. The top laminate should then be of such structure that it can be supplied in rollers and can be fixed directly to the second WPC layer. The top laminate or top layer may consist of paper layers, but also one or more wood veneer layers or vulcanized cellulose layers are conceivable according to the present invention as long as they withstand the heat during pressing. In a further alternative embodiment, the top laminate can be left out and the decor can be printed directly on the WPC material. As an alternative or additionally, the raw WPC material can be embossed and/or chafed/sanded in a particulate pattern to imitate natural materials such as wood or stone.

From the foregoing, it will be clear that the invention provides a panel of which the dimensions are stable despite of varying ambient conditions.

## Claims

1. A floor panel (1) having coupling means formed at least on two opposite sides of the floor panel to couple adjacent floor panels together, the panel comprising a polymeric composite layer (2) and at least a reinforcement layer (3) for reinforcing the polymeric composite layer (2) at least in the plane of the panel (1), the reinforcement layer (3) being incorporated within the polymeric composite layer (2) and made of a material which is different from that of the polymeric composite layer (2), wherein the reinforcement layer is thinner than the polymeric composite layer and the polymeric composite is a mixture of one or more polymers and non-polymeric material, wherein the reinforcement layer (3) has an open structure and the polymeric composite layer (2) is continuous through open areas (11) of the open structure.

2. A floor panel (1) having coupling means formed at least on two opposite sides of the floor panel to couple adjacent floor panels together, the panel comprising a polymeric composite layer (2) and at least a reinforcement layer (3) for reinforcing the polymeric composite layer (2) at least in the plane of the panel (1), the reinforcement layer (3) being incorporated within the polymeric composite layer (2) and made of a material which is different from that of the polymeric composite layer (2), wherein the reinforcement layer is thinner than the polymeric composite layer, the polymeric composite layer (2) is a WPC layer (2) made of wood plastic composite (WPC) and the reinforcement layer (3) is a non-WPC reinforcement layer (3), wherein the reinforcement layer (3) has an open structure and the polymeric composite layer (2) is continuous through open areas (11) of the open structure.

3. A panel (1) according to claim 1, wherein the non-polymeric material is chalk.

4. A panel (1) according to one of the preceding claims, wherein the reinforcement layer (3) comprises a fibre web.

5. A panel (1) according to one of the preceding claims, wherein the reinforcement layer (3) comprises longitudinal filaments (9, 9', 9") and transversal filaments (10) extending in transverse direction with respect to the longitudinal filaments (9, 9', 9").

6. A panel (1) according to claim 5, wherein the mutual distance of the longitudinal filaments (9, 9', 9") and/or the transversal filaments (10) vary within the reinforcement layer.

7. A panel (1) according to claim 5 or 6, wherein said filaments are made of glass fibre, and are fixed to each other by fixing means and wherein binders are added to the reinforcement layer.

8. A panel (1) according to one of the preceding claims, wherein the reinforcement layer is made of one piece.

9. A panel (1) according to one of the preceding claims, wherein the panel (1) comprises at least another reinforcement layer, preferably located at a distance from the reinforcement layer (3).

10. A panel (1) according to one of the preceding claims, wherein a polymeric film is provided on the polymeric composite layer, wherein said polymeric film has a decoration pattern which is printed on the film.

## Patentansprüche

1. Fußbodenpaneel (1), das an mindestens zwei gegenüberliegenden Seiten des Fußbodenpaneels ausgebildete Koppelmittel zum Aneinanderkoppeln benachbarter Fußbodenpaneele aufweist, wobei das Paneel eine Polymerverbundwerkstoffschicht (2) und mindestens eine Verstärkungsschicht (3) zum Verstärken der Polymerverbundwerkstoffschicht (2) mindestens in der Ebene des Paneels (1) umfasst, wobei die Verstärkungsschicht (3) in die Polymerverbundwerkstoffschicht (2) eingearbeitet ist und aus einem Material hergestellt ist, das von dem der Polymerverbundwerkstoffschicht (2) verschieden ist, wobei die Verstärkungsschicht dünner als die Polymerverbundwerkstoffschicht ist, und der Polymerverbundwerkstoff eine Mischung aus einem oder mehreren Polymeren und nichtpolymerem Material ist, wobei die Verstärkungsschicht (3) eine offene Struktur hat und die Polymerverbundwerkstoffschicht (2) durch offene Gebiete (11) der offenen Struktur kontinuierlich ist.

2. Fußbodenpaneel (1), das an mindestens zwei gegenüberliegenden Seiten des Fußbodenpaneels ausgebildete Koppelmittel zum Aneinanderkoppeln benachbarter Fußbodenpaneele aufweist, wobei das Paneel eine Polymerverbundwerkstoffschicht (2) und mindestens eine Verstärkungsschicht (3) zum Verstärken der Polymerverbundwerkstoffschicht (2) mindestens in der Ebene des Paneels (1) umfasst, wobei die Verstärkungsschicht (3) in die Polymerverbundwerkstoffschicht (2) eingearbeitet ist und aus einem Material hergestellt ist, das von dem der Polymerverbundwerkstoffschicht (2) verschieden ist, wobei die Verstärkungsschicht dünner als die Polymerverbundwerkstoffschicht ist, wobei die Polymerverbundwerkstoffschicht (2) eine WPC-Schicht (2), hergestellt aus "Wood Plastic Composite" (WPC), ist und die Verstärkungsschicht (3) eine nicht-WPC-Verstärkungsschicht (3) ist, wobei die Verstärkungsschicht (3) eine offene Struktur hat und die Polymerverbundwerkstoffschicht (2) durch offene Gebiete (11) der offenen Struktur kontinuierlich ist.

3. Paneel (1) nach Anspruch 1, wobei das nichtpolymere Material Kreide ist.

4. Paneel (1) nach einem der vorhergehenden Ansprüche, wobei die Verstärkungsschicht (3) ein Fasergewebe umfasst.

5. Paneel (1) nach einem der vorhergehenden Ansprüche, wobei die Verstärkungsschicht (3) Längsfilamente (9, 9', 9") und Querfilamente (10), die sich in Bezug auf die Längsfilamente (9, 9', 9") in Querrichtung erstrecken, umfasst.

6. Paneel (1) nach Anspruch 5, wobei der gegenseitige Abstand der Längsfilamente (9,9',9") und/oder der Querfilamente (10) in der Verstärkungsschicht variiert.

7. Paneel (1) nach Anspruch 5 oder 6, wobei die Filamente aus Glasfaser hergestellt sind und mit Fixiermitteln aneinander fixiert sind und wobei Bindemittel zu der Verstärkungsschicht zugesetzt sind.

8. Paneel (1) nach einem der vorhergehenden Ansprüche, wobei die Verstärkungsschicht aus einem Stück besteht.

9. Paneel (1) nach einem der vorhergehenden Ansprüche, wobei das Paneel (1) mindestens eine andere Verstärkungsschicht umfasst, die sich bevorzugt in einem Abstand von der Verstärkungsschicht (3) befindet.

10. Paneel (1) nach einem der vorhergehenden Ansprüche, wobei auf der Polymerverbundwerkstoffschicht eine Polymerfolie angebracht ist, wobei die Polymerfolie ein auf die Folie aufgedrucktes Dekormuster aufweist.

## Revendications

1. Panneau de sol (1) possédant des moyens d'accouplement formés au moins sur deux côtés opposés du panneau de sol pour l'accouplement réciproque de panneaux de sol adjacents, le panneau comprenant une couche composite polymère (2) et au moins une couche de renforcement (3) pour le renforcement de la couche composite polymère (2) au moins dans le plan du panneau (1), la couche de renforcement (3) étant incorporée au sein de la couche composite polymère (2) et étant constituée d'un matériau qui est différent de celui de la couche composite polymère (2) ; dans lequel la couche de renforcement est plus mince que la couche composite polymère et le composite polymère représente un mélange d'un ou de plusieurs polymères et d'un matériau non polymère ; dans lequel la couche de renforcement (3) possède une structure ouverte et la couche composite polymère (2) est continue à travers des zones ouvertes (11) de la structure ouverte.

2. Panneau de sol (1) possédant des moyens d'accouplement formés au moins sur deux côtés opposés du panneau de sol pour l'accouplement réciproque de panneaux de sol adjacents, le panneau comprenant une couche composite polymère (2) et au moins une couche de renforcement (3) pour le renforcement de la couche composite polymère (2) au moins dans le plan du panneau (1), la couche de renforcement (3) étant incorporée au sein de la couche composite polymère (2) et étant constituée d'un matériau qui est différent de celui de la couche composite polymère (2) ; dans lequel la couche de renforcement est plus mince que la couche composite polymère, la couche composite polymère (2) représente une couche WPC (2) constituée d'un composite bois-plastique (WPC) et la couche de renforcement (3) représente une couche de renforcement non WPC ; dans lequel la couche de renforcement (3) possède une structure ouverte et la couche composite polymère (2) est continue à travers des zones ouvertes (11) de la structure ouverte.

3. Panneau (1) selon la revendication 1, dans lequel le matériau non polymère est de la craie.

4. Panneau (1) selon l'une quelconque des revendications précédentes, dans lequel la couche de renforcement (3) comprend une bande fibreuse.

5. Panneau (1) selon l'une quelconque des revendications précédentes, dans lequel la couche de renforcement (3) comprend des filaments longitudinaux (9, 9', 9") et des filaments transversaux (10) s'étendant en direction transversale par rapport aux filaments longitudinaux (9, 9', 9").

6. Panneau (1) selon la revendication 5, dans lequel la distance réciproque des filaments longitudinaux (9, 9', 9") et/ou des filaments transversaux (10) varie au sein de la couche de renforcement.

7. Panneau (1) selon la revendication 5 ou 6, dans lequel lesdits filaments sont constitués par des fibres de verre et sont fixés les uns aux autres par l'intermédiaire de moyens de fixation ; et dans lequel des liants sont ajoutés à la couche de renforcement.

8. Panneau (1) selon l'une quelconque des revendications précédentes, dans lequel la couche de renforcement est réalisée en une seule pièce.

9. Panneau (1) selon l'une quelconque des revendications précédentes, dans lequel le panneau (1) comprend au moins une autre couche de renforcement, de préférence située à une certaine distance de la couche de renforcement (3).

10. Panneau (1) selon l'une quelconque des revendications précédentes, dans lequel un film polymère est prévu sur la couche composite polymère ; dans lequel ledit film polymère possède un motif de décoration qui est imprimé sur le film.
